# EUROPÄISCHE PATENTSCHRIFT

(11) **EP 0 634 423 B1**
(45) Veröffentlichungstag und Bekanntmachung des Hinweises auf die Patenterteilung: **13.11.1996**
(21) Anmeldenummer: 94110534.8
(22) Anmeldetag: 06.07.1994
(51) Int. Cl.: C08F 8/06

(54) **Modifizierte Acrylnitril Polymere, Verfahren zu deren Herstellung sowie deren Verwendung**
Modified acrylonitrile polymers, process for their manufacture and use thereof
Polymères d'acrylonitrile modifiés, leur procédé de préparation et leur application

(30) Priorität: 13.07.1993 DE 4323389
(43) Veröffentlichungstag der Anmeldung: 18.01.1995
(73) Patentinhaber: HOECHST AKTIENGESELLSCHAFT, 65929 Frankfurt am Main (DE)
(72) Erfinder: Huber, Bernd, Dr., D-93309 Kelkheim (DE); Pöter, Heinz Paul, D-93342 Saal-Mitterfecking (DE)

(56) Entgegenhaltungen:
- EP-A- 0 247 975
- WO-A-91/18026
- PATENT ABSTRACTS OF JAPAN vol. 7, no. 147 (C-173) (1292) 28. Juni 1983 & JP-A-58 059 204 (MITSUBISHI KASEI KOGYO K.K.) 8. April 1983
- PATENT ABSTRACTS OF JAPAN vol. 7, no. 147 (C-173) (1292) 28. Juni 1983 & JP-A-58 059 204

## Beschreibung

Die vorliegende Erfindung betrifft neue modifizierte Metallionen adsorbierende Acrylnitrilpolymere, ein Verfahren zu deren Herstellung sowie deren Verwendung bei der Adsorption von Metallionen.

Die Herstellung von Metallionen adsorbierenden Polymeren, insbesondere Schwermetallionen adsorbierenden Polymeren, durch Umsetzung von Polyacrylnitril bzw. acrylnitrilhaltigen Polymeren mit Hydroxylamin ist an sich bekannt.

So beschreiben die JP-A-63-248,438 und JP-A-63-248,439 die Behandlung von Acrylfasern mit Hydroxylamin. Dazu werden Acryl-Stapelfasern mit einer alkoholischen Lösung von Hydroxylamin behandelt oder Acrylfasern werden mit Hydroxylamin behandelt, das sich in einem Gemisch aus einem Lösungsmittel und aus einem Nichtlösungsmittel für Polyacrylnitril befindet. Die behandelten Fasern eignen sich zur Adsorption von Uranylionen aus verdünnten wässrigen Lösungen.

Weitere chemisch modifizierte Materialien, die sich zur Adsorption von Uranylionen aus verdünnten wässrigen Lösungen eignen, sind in der JP-A-63-248,440 und der JP-A-61-219,718 beschrieben.

Es ist also bekannt, daß sich mit Hydroxylamin modifiziertes Polyacrylnitril zum Beispiel zur Adsorption von Metallionen, wie Kupfer-, Eisen- oder Uranylionen, aus wäßrigen Lösungen eignet.

Bedingt durch die Anwendung solcher Adsorbermaterialien bei der Aufarbeitung wässriger Lösungen, welche die entsprechenden Metallionen in der Regel in äußerst geringen Mengen enthalten, ist eine möglichst hohe Aufnahmekapazität des Adsorbermaterials gewünscht. Anzustreben ist dabei gleichzeitig eine geringe Affinintät zu in Wasser häufig vorhandenen lonen, wie Na⁺, Ca²⁺ und Mg²⁺, um eine vorzeitige Desaktivierung des Adsorbermaterials zu vermeiden. Vorbekannte Adsorbermaterialien lassen in dieser Hinsicht noch Wünsche offen.

Es bestand daher die Aufgabe, Adsorbermaterialien für Metallionen mit einer hohen Aufnahmekapazität und einer hohen Selektivität für Schwermetallionen bereitzustellen.

Überraschenderweise wurde gefunden, daß die Reaktionsprodukte von Acrylnitrilpolymeren mit Hydroxylamin unter speziellen Bedingungen zu Materialien weiterveredelt werden können, die sich durch eine erheblich gesteigerte Aufnahmekapazität für Metallionen aus wässrigen Lösungen auszeichnen und mit denen sich die Restionenkonzentrationen aus den behandelten wäßrigen Lösungen entfernen oder reduzieren lassen. Ferner wurde gefunden, daß diese Produkte kaum Ca²⁺ und Mg²⁺ adsorbieren.

Die Erfindung betrifft ein Metallionen adsorbierendes, modifiziertes Acrilnitril-Polymeres, das erhältlich ist durch
a) Umsetzung eines Acrilnitril-Polymeren mit Hydroxylamin oder einem seiner Derivate oder mit einem Gemisch aus Hydroxylamin und einem seiner Derivate, und
b) Behandlung des Produktes aus Schritt a) mit einem Oxidationsmittel.

Bevorzugte Ausführungsformen der Erfindung sind in den abhängigen Ansprüchen beschrieben.

Unter Acrylnitril-Polymeren sind im Rahmen dieser Erfindung Homopolymere aus Acrylnitril zu verstehen, aber auch Copolymere des Acrylnitrils mit Monomereinheiten, die sich mit Acrylnitril copolymerisieren lassen, vorzugsweise mit ungesättigten Carbonsäuren, wie beispielsweise Acrylsäure, Methacrylsäure oder Itaconsäure; mit ungesättigten Sulfonsäuren, wie beispielsweise Allyl-, Methallyl-, oder Styrolsulfonsäure; mit ungesättigten Carbonsäureamiden, wie Acrylamid oder Methacrylamid; mit ungesättigten Carbonsäureestern, wie beispielsweise die Methyl-, Ethyl-, Propyl-, Butylester der Acryl- oder Methacrylsäure oder mehrfunktionelle Hydroxyethyl- oder Aminoethylester bzw. deren Derivate der Acryl- oder Methacrylsäure; mit ungesättigten Aldehyden oder Ketonen, wie beispielsweise Acrolein oder Crotonaldehyd; mit Säurehalogeniden ungesättigter Carbonsäuren, wie beispielsweise Acryl- oder Methacrylsäurechloride; oder mit weiteren mit Acrylnitril copolymerisierbaren Monomeren, wie beispielsweise Styrol, Butadien oder Propylen.

Der Anteil solcher Comonomerer im Molekül beträgt üblicherweise bis zu 15 Gew %, bezogen auf das Polymere. Es können aber auch größere Anteile an Comonomereinheiten vorliegen, beispielsweise bis zu 50 Gew %, bezogen auf das Polymere.

Ferner können die Polymeren durch bifunktionelle Monomere, wie z.B. Divinylbenzol, veredelt werden. Günstig sind dabei 0,5 bis 10 Gew. %, vorzugsweise 1 bis 5 Gew. %. Die Vernetzung kann bereits bei den einzusetzenden Acrylnitrilpolymerisaten erfolgt sein oder es wird im Anschluß an die erfindungsgemäße Behandlung eine Vernetzung durchgeführt.

Vernetzte Polymere dieses Typs sind insbesondere dann von Vorteil, wenn durch die chemische Umsetzung bei der Herstellung der erfindungsgemäßen Polymeren Anteile wasserlöslicher Produkte entstehen. Die Erfindung betrifft daher auch vernetzte Produkte dieses Typs.

Zu den die Komplexbildung verstärkenden funktionellen Gruppen im Polymeren eignen sich beispielsweise Carbonsäuren, Carbonsäureamide, Sulfonsäuren, Amine oder Imine.

Die Acrylnitril-Polymeren zur Herstellung der erfindungsgemäß modifizierten Polymeren werden in der Regel über allgemein übliche anionische oder vorzugsweise radikalische Polmerisationsverfahren in organischen Lösungsmitteln oder in wäßrigen Systemen hergestellt.

Für die Reaktion mit Hydroxylamin oder mit Hydroxylaminderivaten können die Acrilnitril-Polymeren in jeder beliebigen Form eingesetzt werden.

Vorzugsweise werden die Acrylnitril-Polymeren in feinverteilter Form, beispielsweise in Pulver- oder Kugelform oder in der Form von Formkörpern mit großem Oberfläche zu Volumen Verhältnis, beispielsweise in der Form von Fasern oder Folien oder daraus hergestellten Flächen- oder Raumgebilden, eingesetzt.

Beim Einsatz von Pulver- oder Kugelformen kann beispielsweise die Korngröße bzw. die Korngrößenverteilung über die Art der Polymerisation gesteuert werden

Dabei kann auch die Oberfläche in weiten Bereichen variiert werden. Eine möglichst große Oberfläche kann das Adsorptionsvermögen steigern.

Die Umsetzung mit Hydroxylamin oder Derivaten des Hydroxylamins kann beispielsweise in Wasser in neutralem oder leicht alkalischem Medium erfolgen; die Umsetzung kann auch in Alkoholen, beispielsweise in Methanol oder in Ethanol, erfolgen.

Die Umsetzung erfolgt üblicherweise bei Temperaturen von 40 bis 100°C. Vorteilhaft sind dabei erhöhte Reaktionstemperaturen, beispielsweise von 70 bis 100°C.

Über die eingesetzte Menge des Hydroxylamins kann sowohl die Aufnahmekapazität als auch die Selektivität zwischen unterschiedlichen Metallionen gesteuert werden. Typische Mengen von Hydroxylamin bzw. Hydroxylaminderivaten bewegen sich im Bereich von 0,1 bis 1 Mol pro Acrylnitrileinheit, bevorzugt 0,3 bis 0,6 Mol pro Acrylnitrileinheit.

Auch über den Substituenten von insbesondere monosubstituierten Hydroxylaminderivaten kann die Kapazität und Selektivität des erfindungsgemäßen Metallionen adsorbierenden Materials gesteuert werden.

Dabei kann der Substituent auch beispielsweise sauerstoff- und/oder stickstoffhaltige funktionelle Gruppen tragen, wie beispielsweise Hydroxyl-, Keto-, Carboxy-, Amino-, Cyano- oder Carbonamidgruppen.

In einer bevorzugten Ausführungsform wird die Reaktion mit Hydroxylamin in wäßrigem Medium durchgeführt. Dazu können vorteilhaft Polymere, die in wäßrigen Systemen polymerisiert worden sind, ohne vorherige Trocknung direkt eingesetzt werden. Dies ist eine bevorzugte Möglichkeit, insbesondere die Kapazität des metallionenadsorbierenden Materials zu beeinflussen.

Die abschließende Oxidation kann in feuchtem Zustand oder in wäßrigem Medium durchgeführt werden.

In einer bevorzugten Ausführungsform wird die Oxidation in wäßriger Aufschlämmung des hydroxylamin-modifizierten Acrylnitril-Polymeren durchgeführt. Vorzugsweise verwendet man Wasserstoffperoxid als Oxidationsmittel. Als Oxidationsmittel können auch andere Peroxide oder Peroxosäuren und deren Salze, wie Peressigsäure, Persulfate, Perborate, Periodate, sowie Sauerstoff oder Ozon eingesetzt werden.

Die Oxidation kann in wässrigem saurem, neutralem oder alkalischem Medium durchgeführt werden. Vorzugsweise wählt man ein alkalisches Medium. Zur Verbesserung der mechanischen Stabilität der in wässrigem Medium gequollenen Produkte, zur Einstellung des Quellungsgrades und zur Vermeidung wasserlöslicher Anteile werden bevorzugt vernetzte Polymere eingesetzt.

Über den Vernetzungsgrad kann die mechanische Stabilität, das Quellverhalten und der wasserlösliche Anteil gesteuert werden.

Das so erhaltene Metallionen adsorbierende Material kann ungetrocknet oder getrocknet für die Adsorption in den üblichen Verfahren für einen Ionen- oder Stoffaustausch eingesetzt werden. Der pH-Wert der zu behandelnden wäßrigen Lösungen kann dabei sauer, neutral oder alkalisch eingestellt sein. Der pH-Wert kann dabei sowohl die Aufnahmekapazität als auch die Selektivität beeinflussen. Mit dem erfindungsgemäßen Material ist die Gewinnung vieler Metallionen aus Lösungen, insbesondere aus wässrigen Lösungen möglich. Vorzugsweise verwendet man das erfindungsgemäße Material bei der Adsorption von Schwermetallionen, wie Eisen, Kupfer oder Uran, aus wässrigen Lösungen. Von besonderem Vorteil ist dabei die nur geringe Affinität gegenüber Calzium- und Magnesiumionen.

Die Gewinnung der adsorbierten Metalle kann entweder über eine Regenerierung mit geeigneten Chemikalien oder bei hoher Beladung oder stärkerer Verschmutzung auch über eine Verbrennung des beladenen Materials und die Aufarbeitung der zurückbleibenden Asche erfolgen.

Das erfindungsgemäße metallionenadsorbierende Material kann beispielsweise für die Reinigung von schwermetallhaltigen Wässern oder Abwässern eingesetzt werden oder zur Aufkonzentrierung oder Gewinnung von Schwermetallen aus wässrigen Lösungen. Damit können beispielsweise kontaminierte Wässer der Uranerzgewinnung oder -aufbereitung gereinigt werden. Oder belastete Böden können mit wäßrigen Lösungen extrahiert und die anfallenden Wässer mit dem erfindungsgemäßen Material gereinigt werden. Dabei wird das erfindungsgemäße Material nicht oder nur geringfügig durch oft im Überschuß vorliegende Calzium- und Magnesiumionen blockiert.

Eine weitere bevorzugte Anwendungsform des erfindungsgemäßen Materials ist dessen Einsatz in Form von textilen Flächengebilden, wie Geweben, zur Sanierung von metallbelasteten Böden. Zu diesem Zweck behandelt man Fasern aus Acrylnitrilpolymeren mit Hydroxylamin und oxidiert das Produkt anschließend, wie oben beschrieben. Vorzugsweise liegen diese Fasern bereits als textile Flächengebilde vor. Bevorzugt setzt man solche Flächengebilde als Geotextilien ein.

Auch andere Metalle, insbesondere Schwermetalle, können so einfach entsorgt werden, beispielsweise Quecksilber, Blei und Kupfer.

Neben der Reinigung von Wässern und belasteter Böden kann das erfindungsgemäße Material auch für die Gewinnung von Metallen, insbesondere von Schwermetallen und Edelmetallen eingesetzt werden.

Die Herstellung und das Adsorptionsvermögen des erfindungsgemäßen Materials wird in den folgenden Beispielen beschrieben.

### Beispiel 1 Umsetzung eines Acrylnitril-Polymeren mit Hydroxylamin

132,65 g eines getrockneten Polymerpulvers aus 93,5 Gew.-% Acrylnitril, 6,0 Gew.-% Acrylsäuremethylester und 0,5 Gew.-% Methallylsulfonat mit einem rel. Viskosität von 1,9, gemessen in 0,5 Gew.-%iger Lösung in Dimethylformamid bei 25° C, und einen mittleren Korndurchmesser von 0,04 mm werden in 2000 ml Wasser mit 104,25 g Hydroxylammoniumchlorid und 79,5 g Natriumcarbonat 6,5 h bei 70° C in einem Rührkolben gerührt. Anschließend wird das gelbe Pulver abfiltriert und gewaschen.

### Beispiel 2 Oxidation

266,6 g des Reaktionsproduktes aus Beispiel 1 mit einem Trockengehalt von 66,3 g werden in 1250 ml Wasser mit 250 ml 30 Gew.-%igen Wasserstoffperoxid 5,5 h bei 70° C gerührt. Der pH-Wert zu Beginn der Reaktion wurde auf 8,8 eingestellt und durch Zugabe von Natronlauge wurde der pH-Wert während der Reaktion im Neutralbereich gehalten. Am Ende der Reaktionszeit betrug der pH-Wert 6,4.

Das Reaktionsprodukt wurde abfiltriert und gewaschen. Der Trockengehalt des feuchten Materials betrug 5,7 Gew.-%. Ein Teil des Materials wurde bei 115° C im Trockenschrank getrocknet.

### Beispiel 3 Metallionenadsorption

Die Adsorptionsversuche wurden mit verschiedenen Metallionen in wäßrigen Lösungen durchgeführt. Dabei wurde jeweils das adsorbierende Material 15 min lang bei Raumtemperatur in der wäßrigen Metallsalzlösung gerührt. Nach dem Abfiltrieren wurde der in der wäßrigen Lösung verbliebene Restgehalt an Metallsalz bestimmt. Dabei erfolgte die Bestimmung von Eisen, Kupfer und Calzium durch Titration mit Ethylendiamintetraessigsäure Di-Na-Salz. Uran wurde photometrisch bestimmt.

Die Ergebnisse sind in den folgenden Tabellen wiedergegeben.

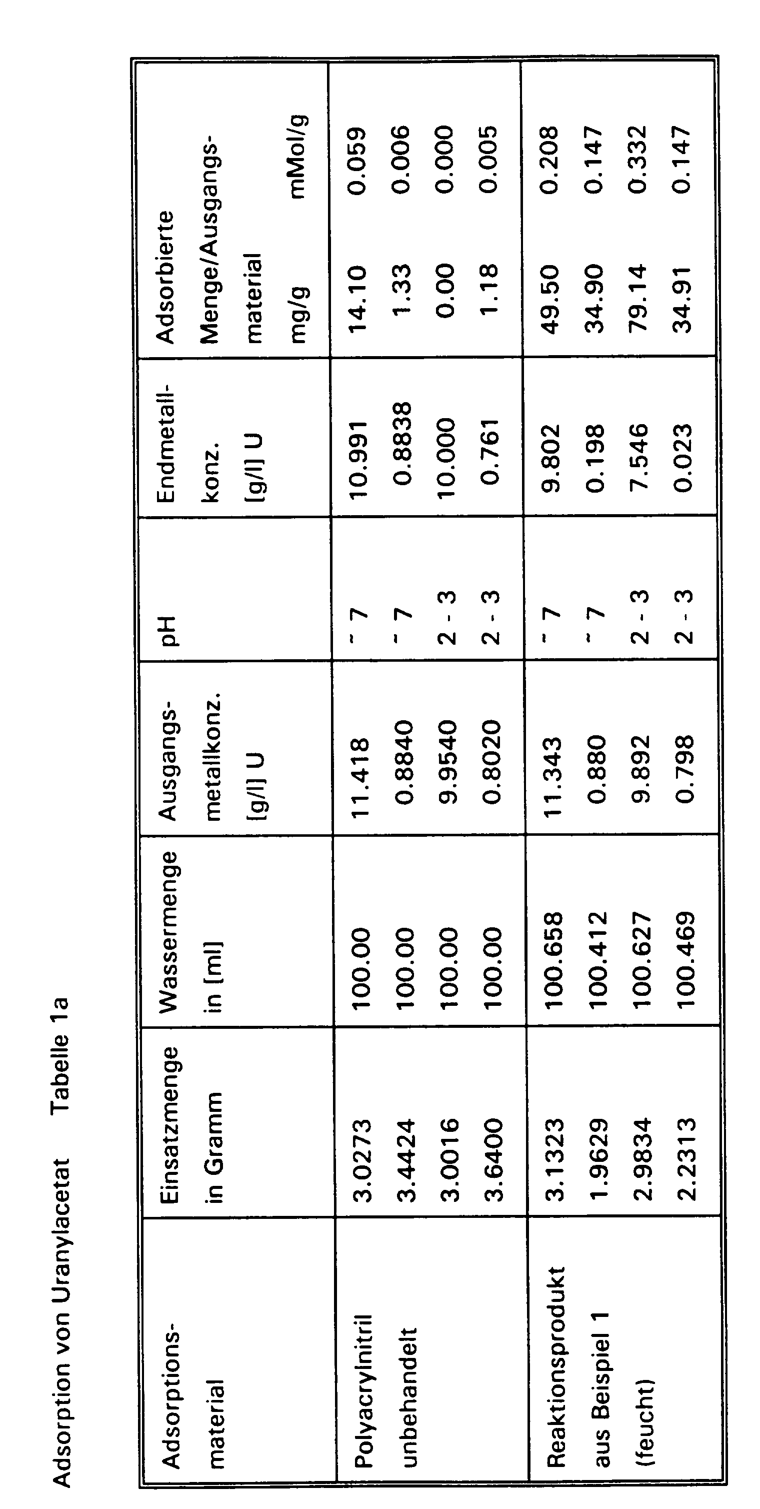

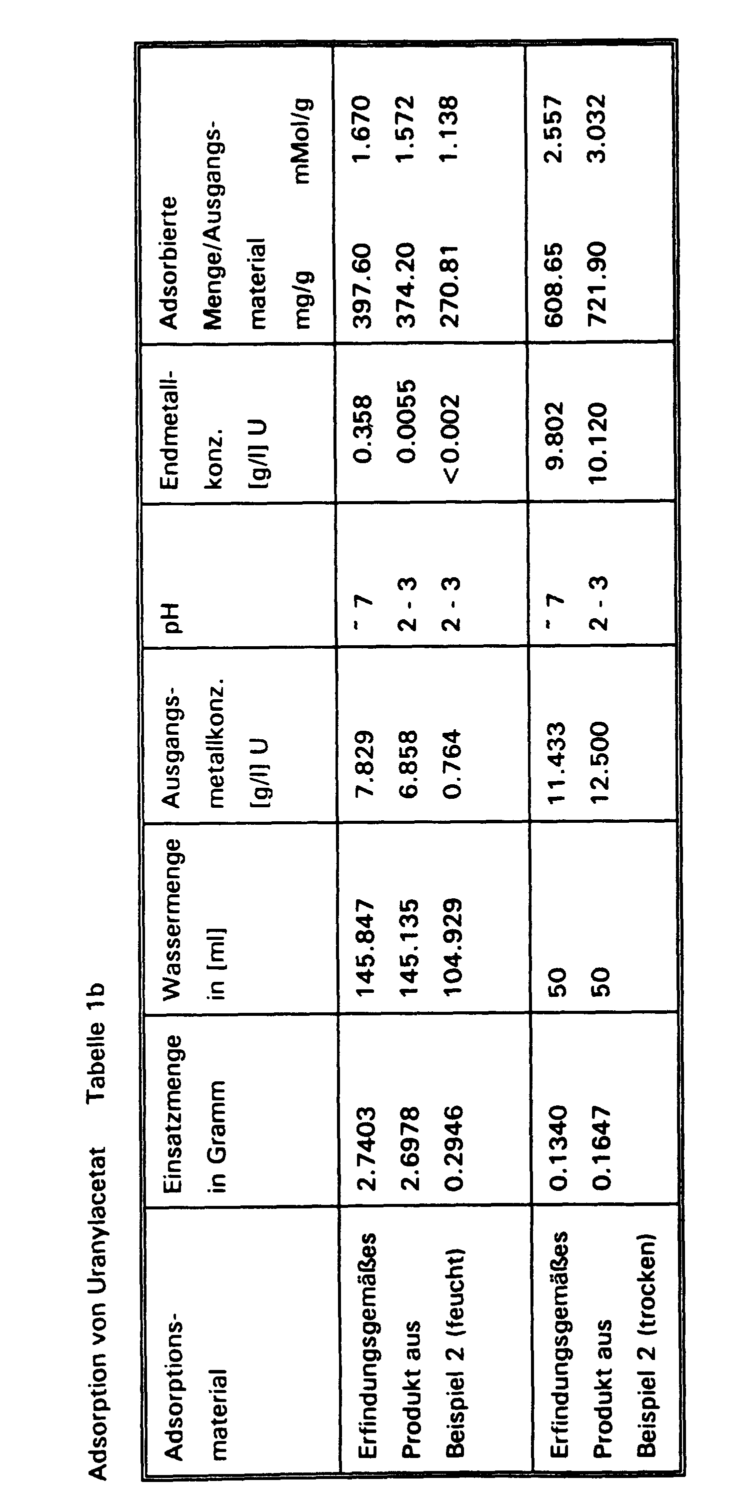

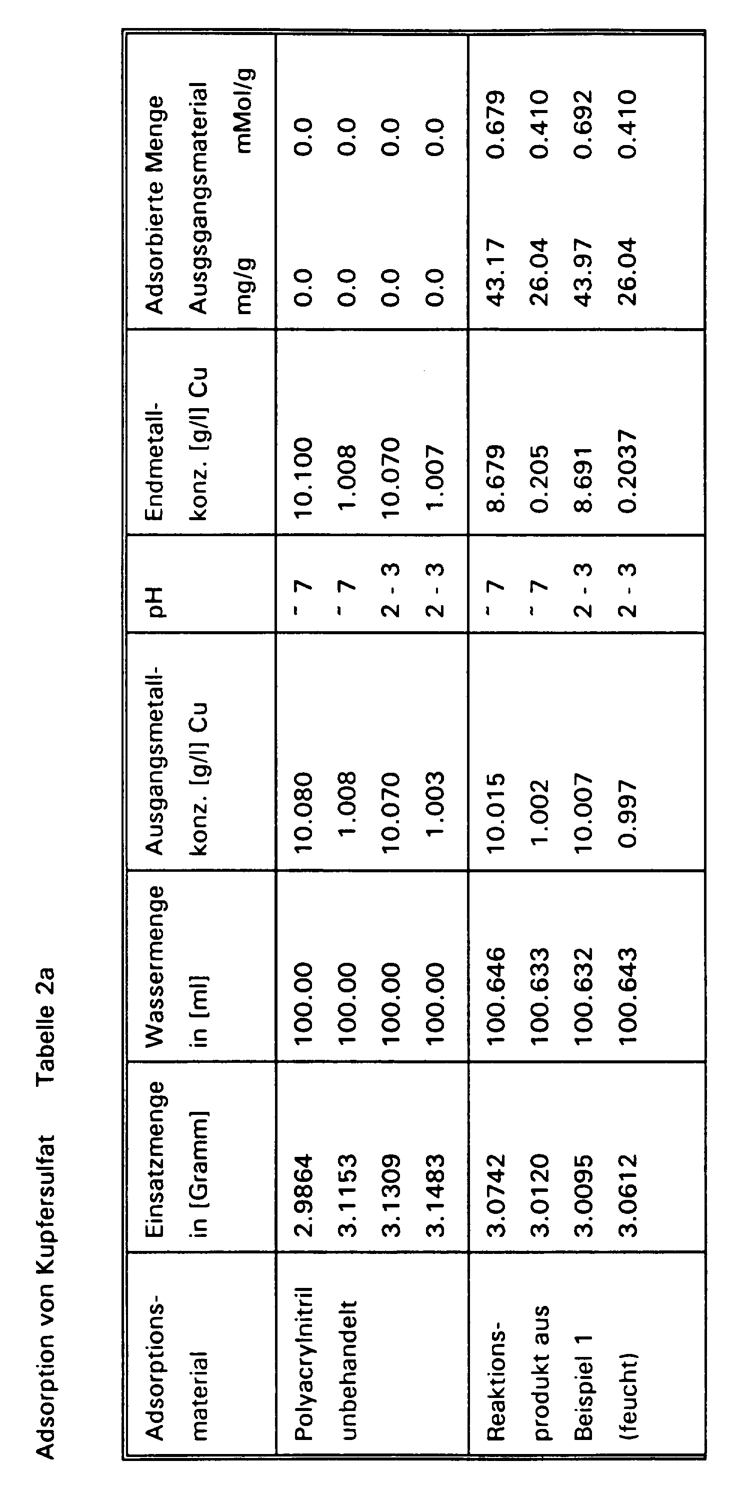

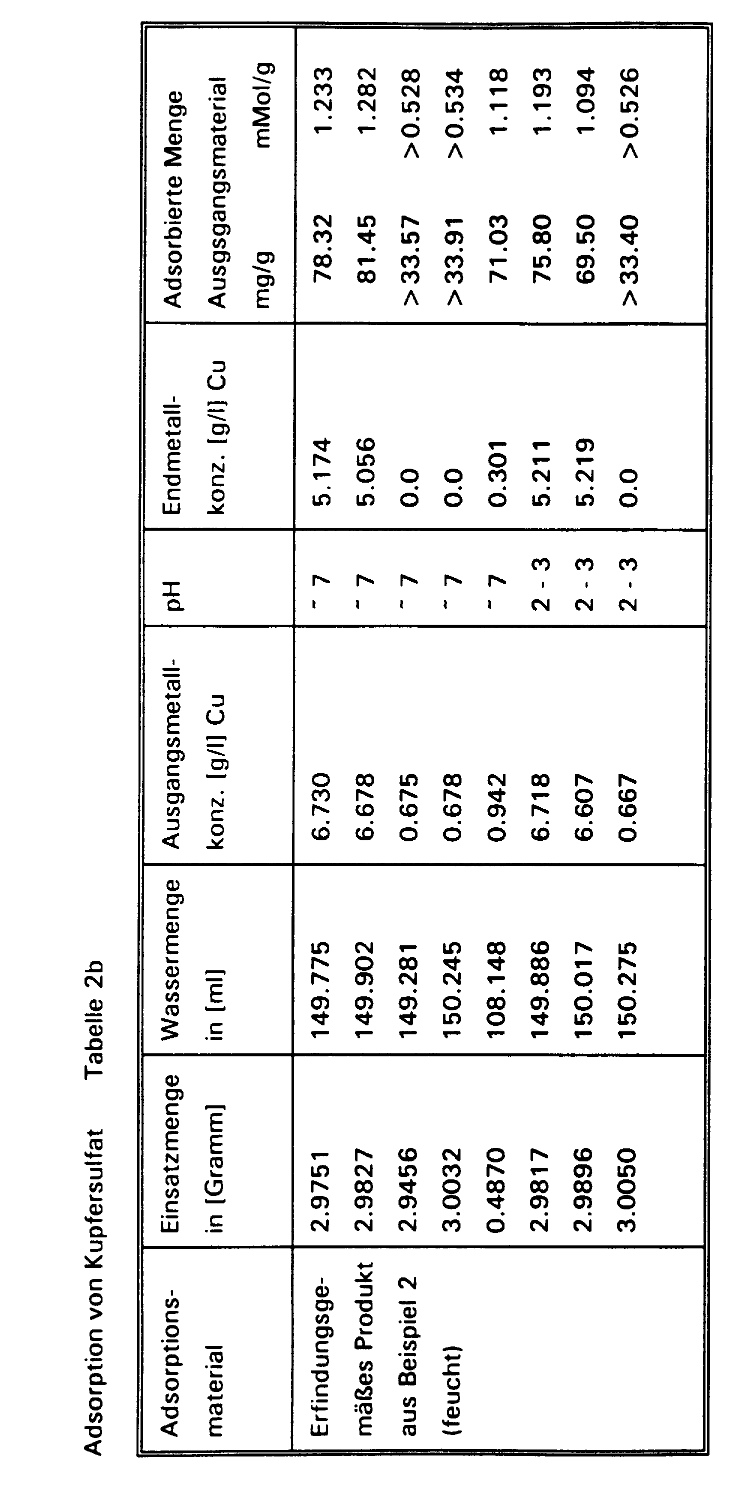

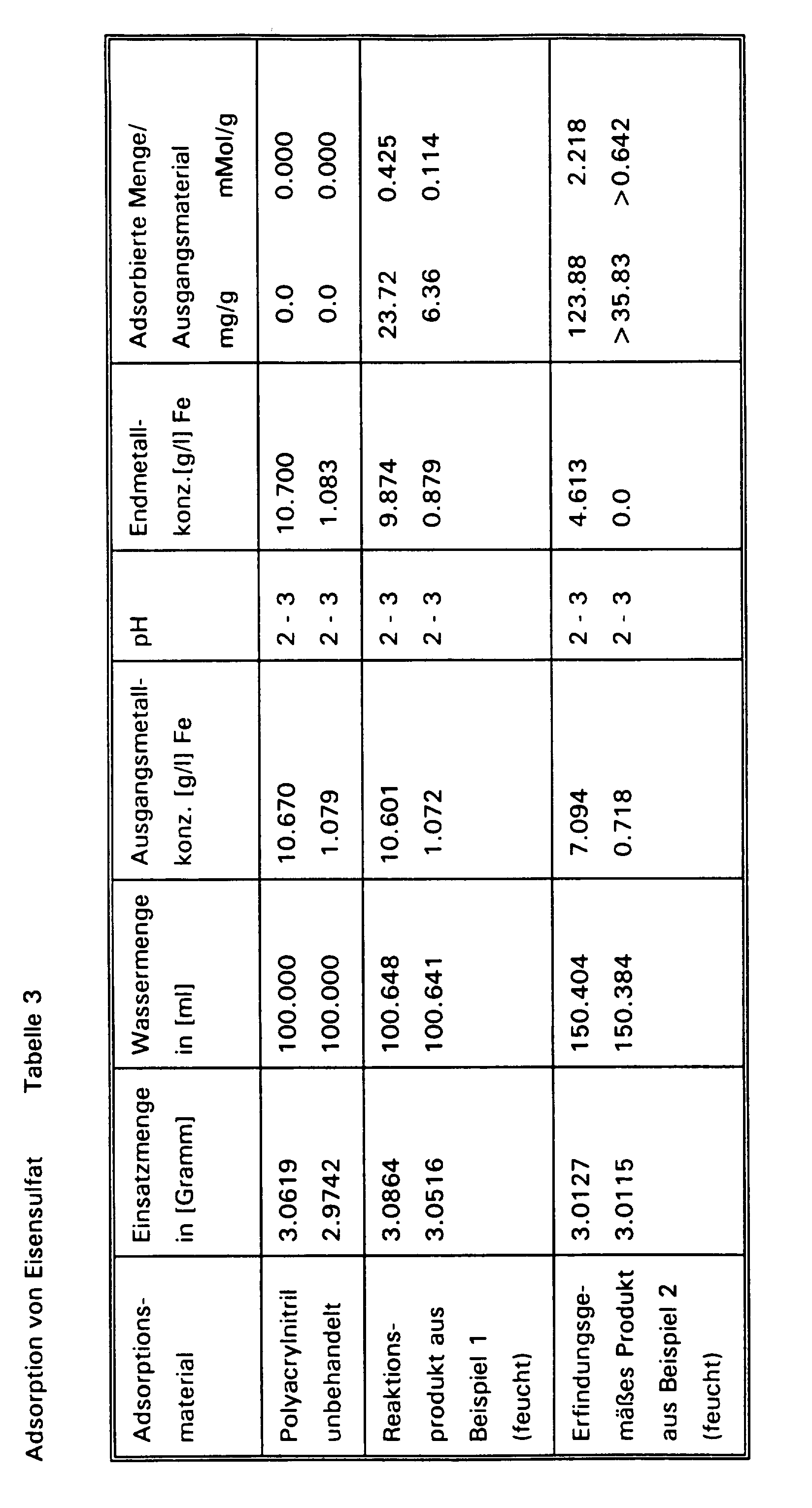

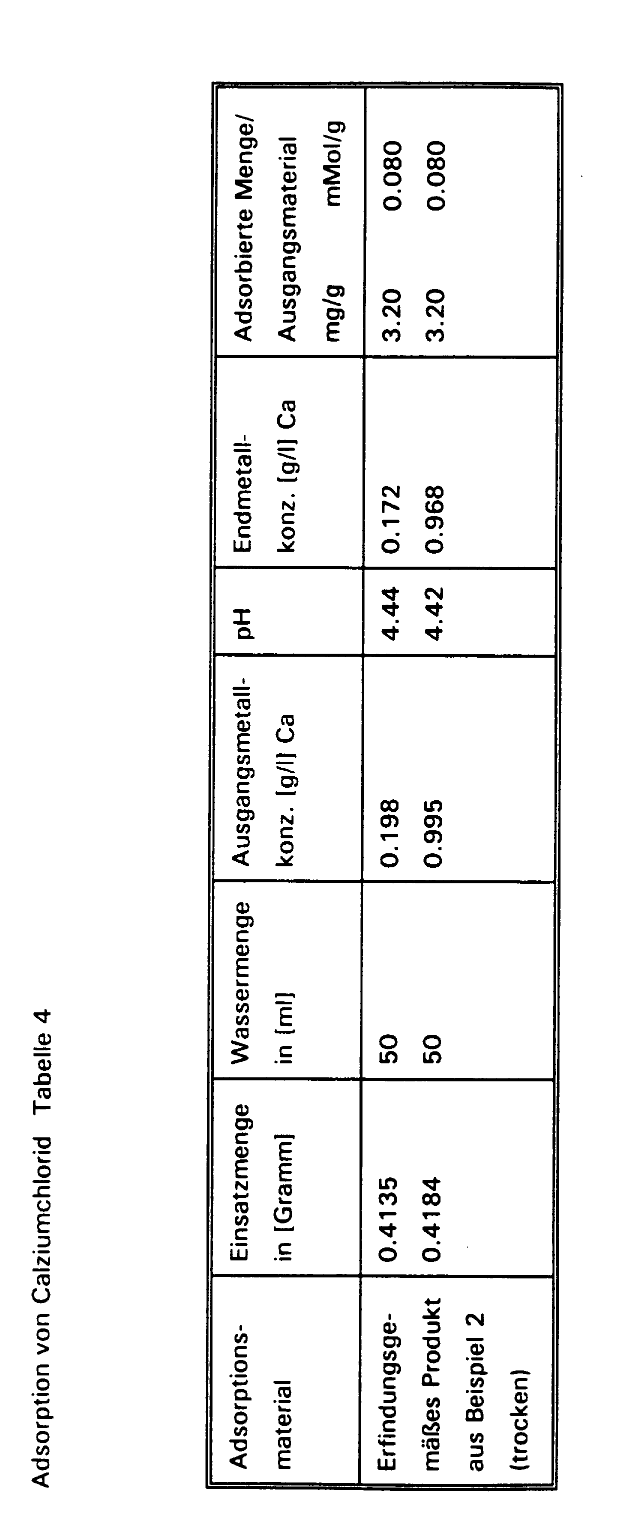

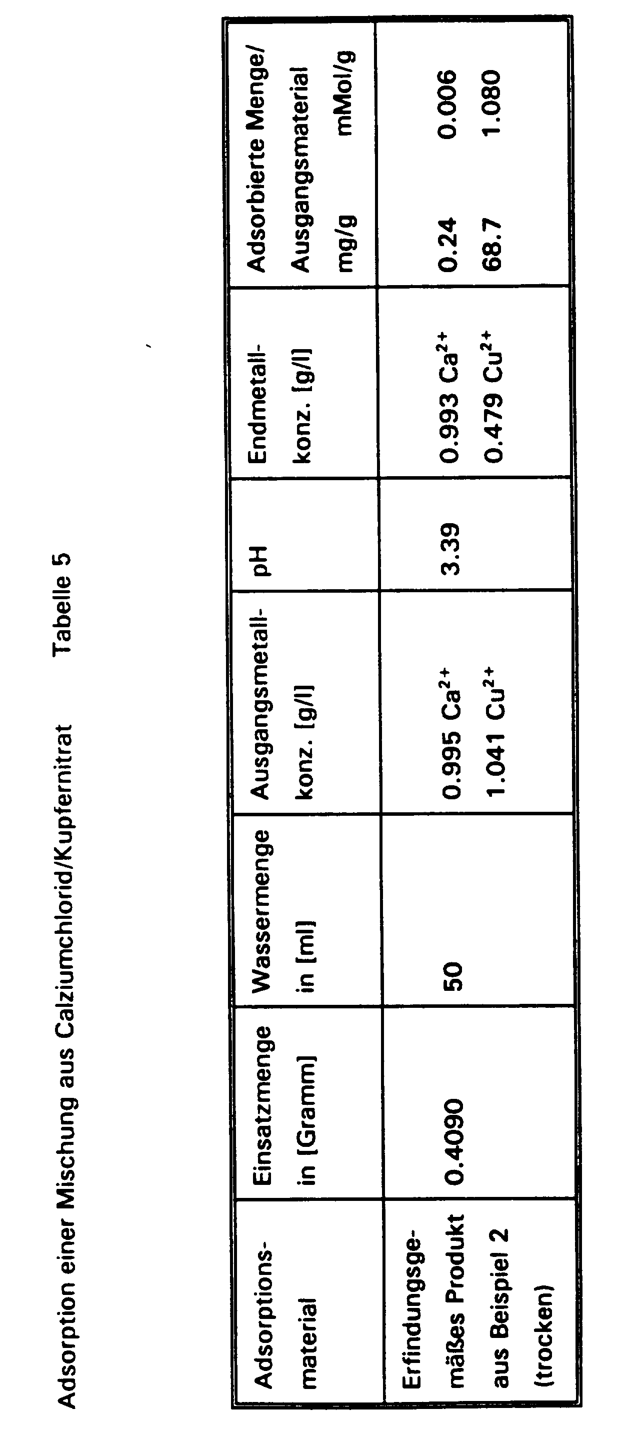

## Patentansprüche

1. Metallionen adsorbierendes, modifiziertes Acrylnitril-Polymeres, das erhältlich ist durch
a) Umsetzung eines Acrylnitril-Polymeren mit Hydroxylamin oder einem seiner Derivate oder mit einem Gemisch aus Hydroxylamin und einem seiner Derivate, und
b) Behandlung des Produktes aus Schritt a) mit einem Oxidationsmittel.

2. Metallionen adsorbierendes Material nach Anspruch 1, dadurch gekennzeichnet, daß die Aufnahmekapazität für Schwermetallionen, wie Eisen-, Kupfer oder Uranylionen, mehr als 1 mMol/g beträgt.

3. Metallionen adsorbierendes Material nach Anspruch 2, dadurch gekennzeichnet, daß die Aufnahmekapazität für Schwermetalle, wie Eisen-, Kupfer oder Uranylionen, mehr als 2 mMol/g beträgt.

4. Metallionen adsorbierendes Material nach Anspruch 1, dadurch gekennzeichnet, daß die Aufnahmekapazität für Calzium- und Magnesiumionen, weniger als 0,2 mMol/g, vorzugsweise weniger als 0,1 mMol/g, beträgt.

5. Metallionen adsorbierendes Material nach Anspruch 1, dadurch gekennzeichnet, daß der Acrylnitrilgehalt des Acrylnitril-Polymeren mehr als 50 Gew.-% beträgt.

6. Metallionen adsorbierendes Material nach Anspruch 1, dadurch gekennzeichnet, daß der Acrylnitrilgehalt des Polymeren mehr als 90 Gew.-% beträgt.

7. Metallionen adsorbierendes Material nach Anspruch 1, dadurch gekennzeichnet, daß das Polymer neben Acrylnitril metallkomplexbildende oder die Metallkomplexbildung fördernde Monomerbausteine enthält.

8. Metallionen adsorbierendes Material nach Anspruch 1, dadurch gekennzeichnet, daß das Polymer neben Acrylnitril Monomerbausteine enthält, die nach einer Umsetzung mit Hydroxylamin oder Hydroxylaminderivaten metallkomplexbildende oder die Metallkomplexbildung fördernde Molekülstrukturen bilden.

9. Metallionen adsorbierendes Material nach einem der Ansprüche 1 und 5 bis 8, dadurch gekennzeichnet, daß das Polymer mit 0,2 bis 5, vorzugsweise 0,5 bis 2 Mol % eines bifunktionellen Monomeren, insbesondere Divinylbenzol, vernetzt ist.

10. Verfahren zur Herstellung eines Metallionen adsorbierenden Materials umfassend die Schritte:
a) Umsetzung eines Acrylnitril-Polymeren mit Hydroxylamin oder einem seiner Derivate oder mit einem Gemisch aus Hydroxylamin und einem seiner Derivate, und
b) Behandlung des Produktes aus Schritt a) mit einem Oxidationsmittel.

11. Verfahren nach Anspruch 10, dadurch gekennzeichnet, daß das Produkt aus Schritt a) in einer wässrigen Aufschlämmung der Oxidation in Schritt b) unterworfen wird.

12. Verfahren nach Anspruch 10, dadurch gekennzeichnet, daß als Oxidationsmittel ein Peroxid, vorzugsweise Wasserstoffperoxid, eingesetzt wird.

13. Verfahren nach Anspruch 10, dadurch gekennzeichnet, daß als Oxidationsmittel Sauerstoff, vorzugsweise Ozon, eingesetzt wird.

14. Verfahren nach Anspruch 10, dadurch gekennzeichnet, daß die Oxidation in alkalischer, wässriger Lösung durchgeführt wird.

15. Verfahren nach Anspruch 10, dadurch gekennzeichnet, daß die Schritte a) und b) an Acrylnitril-Polymeren in Faser- oder Folienform durchgeführt werden.

16. Verwendung des modifiziertens Acrylnitril-Polymeren nach Anspruch 1 zur Reinigung von mit Schwermetallionen belasteten Wässern oder Abwässern.

17. Verwendung nach Anspruch 16, dadurch gekennzeichnet, daß es sich bei den Schwermetallionen um Ionen des Urans, Quecksilbers oder Bleis handelt.

18. Verwendung des modifiziertens Acrylnitril-Polymeren nach Anspruch 1 zur Aufkonzentrierung oder Gewinnung von Schwermetallen aus wäßrigen Lösungen.

19. Verwendung nach Anspruch 18, dadurch gekennzeichnet, daß es sich bei den Schwermetallen um Uran, Quecksilber, Blei, Kupfer oder Edelmetalle handelt.

## Claims

1. A metal ion adsorbent, modified acrylonitrile polymer obtainable by
a) reacting an acrylonitrile polymer with hydroxylamine or one of its derivatives or with a mixture of hydroxylamine and one of its derivatives, and
b) treating the product of step a) with an oxidizing agent.

2. The metal ion adsorbent of claim 1 with an adsorption capacity for heavy metal ions, such as iron, copper or uranyl ions, of more than 1 mmol/g.

3. The metal ion adsorbent of claim 2 with an adsorption capacity for heavy metals, such as iron, copper or uranyl ions, of more than 2 mmol/g.

4. The metal ion adsorbent of claim 1 with an adsorption capacity for calcium and magnesium ions of less than 0.2 mmol/g, preferably less than 0.1 mmol/g.

5. The metal ion adsorbent of claim 1 wherein the acrylonitrile content of the acrylonitrile polymer is more than 50% by weight.

6. The metal ion adsorbent of claim 1 wherein the acrylonitrile content of the acrylonitrile polymer is more than 90% by weight.

7. The metal ion adsorbent of claim I wherein the polymer, in addition to acrylonitrile, contains monomer units which are metal-complexing or promote metal complexing.

8. The metal ion adsorbent of claim 1 wherein the polymer, in addition to acrylonitrile, contains monomer units which on reaction with hydroxylamine or hydroxylamine derivatives form molecular structures which are metal complexing or promote metal complexing.

9. The metal ion adsorbent of any of claims 1 and 5 to 8 wherein the polymer has been crosslinked with 0.2 to 5, preferably from 0.5 to 2, mol% of a bifunctional monomer, in particular divinylbenzene.

10. A process for preparing a metal ion adsorbent comprising the steps of:
a) reacting an acrylonitrile polymer with hydroxylamine or one of its derivatives or with a mixture of hydroxylamine and one of its derivatives, and
b) treating the product of step a) with an oxidizing agent.

11. The process of claim 10 wherein the product of step a) is subjected to the oxidation of step b) in an aqueous suspension.

12. The process of claim 10 wherein the oxidizing agent used is a peroxide, preferably hydrogen peroxide.

13. The process of claim 10 wherein the oxidizing agent used is oxygen, preferably ozone.

14. The process of claim 10 wherein the oxidation is carried out in alkaline, aqueous solution.

15. The process of claim 10 wherein the steps a) and b) are carried out on acrylonitrile polymers in fiber or film form.

16. The use of the modified acrylonitrile polymer of claim 1 for decontaminating waters or wastewaters contaminated with heavy metal ions.

17. A use as claimed in claim 16 wherein the heavy metal ions are ions of uranium, mercury or lead.

18. The use of the modified acrylonitrile polymer of claim 1 for concentrating or recovering heavy metals from aqueous solutions.

19. A use as claimed in claim 18 wherein the heavy metals are uranium, mercury, lead, copper or noble metals.

## Revendications

1. Polymère de l'acrylonitrile modifié, adsorbant les ions métalliques, que l'on peut obtenir par :
a) réaction d'un polymère de l'acrylonitrile avec de l'hydroxylamine ou l'un de ses dérivés ou avec un mélange d'hydroxylamine et d'un de ses dérivés, et
b) traitement du produit de l'étape (a) avec un oxydant.

2. Matériau adsorbant les ions métalliques selon la revendication 1, caractérisé en ce que la capacité d'adsorption des ions de métaux lourds, tels que les ions fer, cuivre ou uranyle, est supérieure à 1 mmole/g.

3. Matériau adsorbant les ions métalliques selon la revendication 2, caractérisé en ce que la capacité d'adsorption de métaux lourds, tels que les ions fer, cuivre ou uranyle, est supérieure à 2 mmoles/g.

4. Matériau adsorbant les ions métalliques selon la revendication 1, caractérisé en ce que la capacité d'adsorption calcium et magnésium est inférieure à 0,2 mmol/g et de préférence inférieure à 0,1 mmole/g.

5. Matériau adsorbant les ions métalliques selon la revendication 1, caractérisé en ce que la teneur en acrylonitrile du polymère de l'acrylonitrile est supérieure à 50 % en poids.

6. Matériau adsorbant les ions métalliques selon la revendication 1, caractérisé en ce que la teneur en acrylonitrile du polymère est supérieure à 90 % en poids.

7. Matériau adsorbant les ions métalliques selon la revendication 1, caractérisé en ce que le polymère, outre de l'acrylonitrile, contient des constituants monomères formant des complexes métalliques ou favorisant la complexation des métaux.

8. Matériau adsorbant les ions métalliques selon la revendication 1, caractérisé en ce que le polymère, outre l'acrylonitrile, contient des motifs monomères qui, après une réaction avec l'hydroxylamine ou des dérivés de l'hydroxylamine, forment des structures moléculaires formant des complexes métalliques ou favorisant la complexation de métaux.

9. Matériau adsorbant les ions métalliques selon l'une des revendications 1 et 5 à 8, caractérisé en ce que le polymère est réticulé par 0,2 à 5 et de préférence 0,5 à 2 % en moles d'un monomère bifonctionnel, en particulier le divinylbenzène.

10. Procédé pour préparer un matériau adsorbant les ions métalliques, caractérisé par les étapes suivantes :
a) réaction d'un polymère de l'acrylonitrile avec de l'hydroxylamine ou l'un de ses dérivés ou avec un mélange d'hydroxylamine et d'un de ses dérivés, et
b) traitement du produit de l'étape (a) avec un oxydant.

11. Procédé selon la revendication 10, caractérisé en ce que le produit de l'étape (a) est soumis à l'oxydation de l'étape (b) en suspension aqueuse.

12. Procédé selon la revendication 10, caractérisé en ce qu'on utilise comme oxydant un peroxyde, de préférence le peroxyde d'hydrogène.

13. Procédé selon la revendication 10, caractérisé en ce qu'on utilise comme oxydant de l'oxygène, de préférence l'ozone.

14. Procédé selon la revendication 10, caractérisé en ce que l'oxydation est mise en oeuvre dans une solution aqueuse alcaline.

15. Procédé selon la revendication 10, caractérisé en ce que les étapes (a) et (b) appliquées sur le polymère de l'acrylonitrile sont mises en oeuvre sous forme de fibres ou de feuilles.

16. Utilisation du polymère de l'acrylonitrile modifié selon la revendication 1 pour purifier des eaux ou des eaux usées contaminées par des ions de métaux lourds.

17. Utilisation selon la revendication 16, caractérisée en ce que, pour ce qui concerne les ions de métaux lourds, il s'agit des ions uranium, mercure ou plomb.

18. Utilisation du polymère de l'acrylonitrile modifié selon la revendication 1 pour concentrer ou récupérer des métaux lourds à partir de solutions aqueuses.

19. Utilisation selon la revendication 18, caractérisée en ce que, pour ce qui concerne les métaux lourds, il s'agit de l'uranium, de l'argent, du plomb, du cuivre ou des métaux précieux.
